# EUROPEAN PATENT APPLICATION

(11) **EP 1 269 885 A2**
(43) Date of publication of application: **02.01.2003**
(21) Application number: 02254332.6
(22) Date of filing: 20.06.2002
(51) Int. Cl.: A45F 5/00, H04B 1/38

(54) **Removable strap**

(30) Priority: 29.06.2001 GB 0115974
(71) Applicant: Nokia Corporation, 02150 Espoo (FI)
(72) Inventor: Johnson, Keith, North Ascot, Berkshire SL5 8JX (GB)
(74) Representative: Johnson, Ian Michael

(57) **Abstract**

A strap (1) adapted for connecting to the base (7) of a portable electronic device comprising: a frame portion (3); a boss element (2) fixedly attached to said frame portion; said boss element being designed to co-operate with a recess (11) in an electronic device.

## Description

The present invention relates to a device for suspending across a user's chest an electronic device, particularly but not exclusively, for a mobile telephone handset or digital communicator handset.

Portable electronic devices such as mobile telephone handsets, personal digital assistants (PDAs) and digital communicator handsets can run and display information including: the caller's name and number; images of the caller; hypertext pages via Wireless Application Protocol (WAP); and short messaging service (SMS) communications.

Currently, mobile radio handsets are carried about the person in a number of ways, for example, in holders, in pockets, on belt clips, and the like. However, these securing means are limited in that the mobile device must be detached from the securing member before the user can adequately view the handset display and respond to the communication.

The communication device's display must be proximal to and face the user before a response can be communicated on the communication device. Of course, the user in some cases may wish to read the displayed information without having to detach the electronic device from some securing implement. This invention addresses such a problem.

The present invention seeks to provide a strap adapted for such use.

According to a first aspect, the present invention provides a combination of a strap and an electronic device wherein the strap comprises a frame portion and a boss element attached to one end of said frame portion, and wherein said boss element is designed to co-operate with one or more recesses in the electronic device.

Preferably, the boss element has a part-spherical/hemispherical/spherical portion to engage with a complementary shaped recess.

Preferably, the frame portion comprises two laterally spaced arm portions each having a boss element at one end. Preferably, the laterally spaced arm portions of the frame originate from a common apex to define the sides of a triangular shape.

Preferably, the strap and the device are arranged such that the boss element is held in the or each recess by abutment with a removable portion of the device. Preferably, the boss element has a flat portion to abut with the removable portion of the device. Preferably, the removable portion is the electronic device battery.

Preferably, the boss element is fixedly attached to the frame portion. Preferably, the or each recess is located towards the base of the electronic device.

Preferably, the frame portion end opposing the boss element end is arranged to be used to carry/wear the electronic device.

Preferably, the electronic device is a mobile phone. Preferably, the boss element is substantially flat and has an axis of symmetry perpendicular to the plane of the frame portion. Preferably, wherein said frame portion is formed from a flexible material. Preferably, said frame portion is formed from a rigid material. Preferably, the boss element is formed of a rigid material.

Preferably, the electronic device comprises: a first cover; a recess in said first cover for receiving a boss element of a strap; and a second cover. Preferably, said strap is secured into said first cover by disposing a removable second cover thereon.

Preferably, said recess comprises a slit for guiding a boss member into the recess.

In a second aspect, the invention provides a strap according to the first aspect of the invention.

In a third aspect, the invention provides a electronic device according to the first aspect of the invention.

The present invention is particularly useful where the user is expecting a message and immediate visual access thereof is preferred.

The present invention herein described allows the user to read the display whilst the radio telephone handset hangs in an inverted manner across the user's chest. This permits immediate access to the radiotelephone without having to detach the electronic device from a securing means in order to view the communication device display when a communication is received.

An advantage of such a device is the ease with which the components can be manufactured by methods known to the skilled person, such as, insert moulding, forging, and pressing.

An embodiment of the invention is presented by way of example, with reference to the accompanying drawings, in which:
Figure 1 is a perspective view of the neck strap with a connector and loop attachment.
Figure 2 is a schematic view of the co-ordination of the neck strap with the rear cover.
Figure 3 shows the disposition of the boss ends of the neck strap in the recesses housed at the base of the rear cover.
Figure 4 shows the coupling of the boss element with the end of the frame portion.
Figure 5 is a schematic of the strap inserted into the base of the rear cover with the battery cover disposed above the rear cover.
Figure 6 is a schematic of the strap secured to the base of the rear cover with the battery cover thereon.

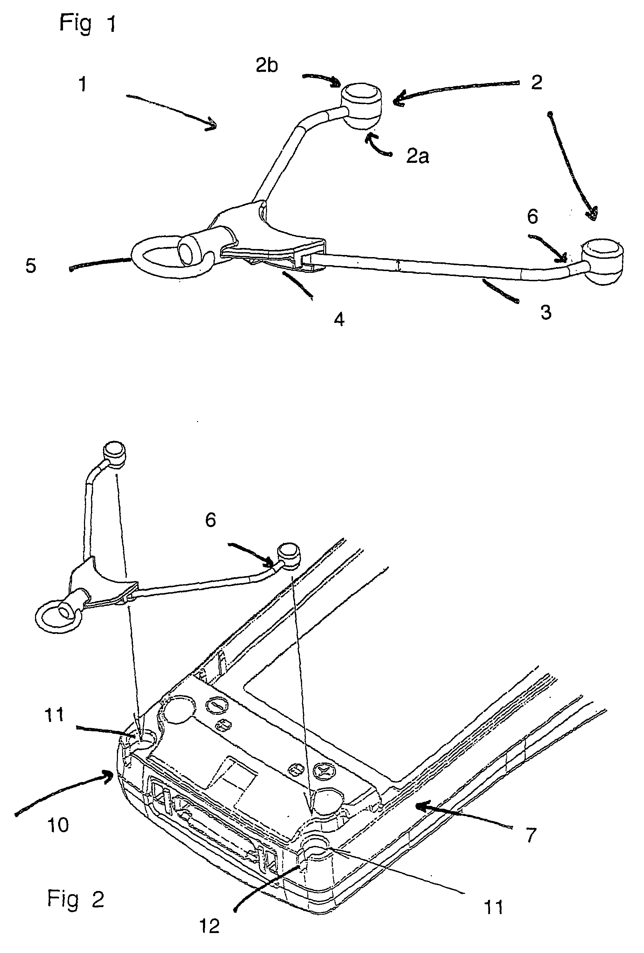

An embodiment of the present invention will be described, by way of example only, with reference to figures 1 to 6 of the accompanying drawings.

Figure 1 shows an embodiment of the strap 1 with its assembled parts. The boss elements 2 are fixedly attached to the ends of the frame portion 3. Additionally, a connector 4 with an attachment loop 5 is disposed at the head of the strap as shown in figure 1 so as to allow a suspending means to suspend uprightly the electronic device across the user's chest.

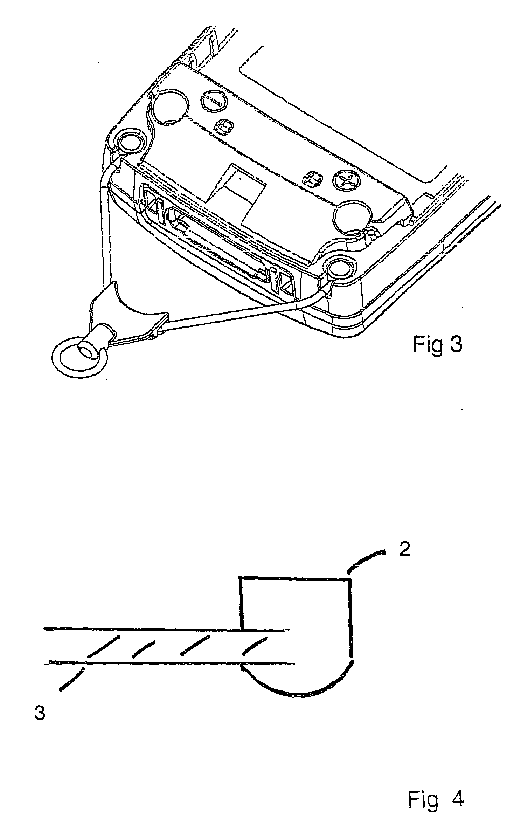

Figure 2 shows how the boss elements 2 attached to the frame portion 3 are designed to co-operate with a recess in an electronic device. The bosses 2 are aligned with the corresponding recesses 11 housed at the end of the rear cover 7 and, hence, the strap is removably positioned therein as shown in figure 3.

The frame portion of the strap can be formed from rigid metallic material such as stainless steel, an aluminium alloy or zinc alloy. In the case of a metallic frame portion, forming may be accomplished by drawing processes that are well known in the art. It could also be manufactured from a flexible polymer material such as nylon. Such a flexible frame portion allows with ease the attachment of a connector thereto, thus minimising the stress transmitted to the base of the rear cover.

Boss elements are formed from light metal/ alloy compositions, for example, aluminium alloys or zinc alloys. Alternatively the boss element may be formed from a polymer material such as Acrylonitrile Butadiene Styrene (ABS):
A metallic boss element and metallic frame portion are fixedly attached by forging or pressing in a die tool as shown in figure 4. For a stainless steel frame the ends of the frame portion can be forged on to the boss elements.

For polymer materials, the boss element is insert moulded to the end of the frame portion by disposing it in the tool, and once the latter is closed the polymer material is injected around the end of the chord to form the boss element.

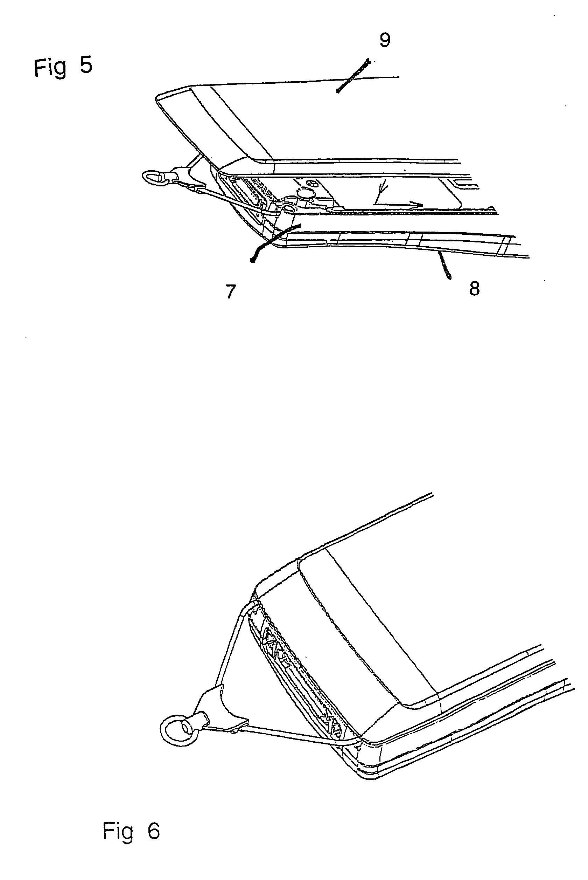

The internal circuitry of the electronic device is encapsulated within an exterior casing, as illustrated in figure 5, comprising a front cover 8, a rear cover 7 and a battery cover 9 the rims of which co-operate to secure and contain the electronic device's internal components.

In the current embodiment, the end 10 of the rear cover 7, as shown in figure 2, comprises two recesses 11 on either end thereof for receiving corresponding boss members, and said recesses comprise slits 12 for guiding into the recess 11 the frame portions adjacent 6 the corresponding boss element.

The recess 11 is sized and shaped so as to receive the boss element without incurring damage to the co-operating parts such as to the rear cover 7 of the phone.

As illustrated in figure 1, the lower end 2a of the boss element is substantially spherical, which facilitates co-operation of the boss element with the recesses housed in the rear cover. A flat upper face 2b of the boss ensures comfortable co-operation therof with the battery cover when concealing the battery.

Once the boss elements of the strap are inserted into the corresponding recesses, the battery cover can be attached to the rear case of the radio handset as illustrated in figure 5. This secures the strap to the lower portion of the handset shown in figure 6 which can now hang inverted across the user's chest allowing readable access of the display.

In addition, if the strap is not attached to the radiotelephone, the recesses housed in the rear cover are concealed by disposing the battery cover thereon, without compromising the aesthetic appeal of the rear cover.

It will be appreciated that many modifications may be made to the embodiment herein before described. For example, the strap may comprise one or more boss elements for disposing in one or more recesses.

It will be appreciated that the invention can be used in relation to any sort of portable electronic device including a radiotelephone, a personal digital assist and the like.

## Claims

1. A combination of a strap and an electronic device wherein the strap comprises a frame portion and a boss element attached to one end of said frame portion, and wherein said boss element is designed to co-operate with one or more recesses in the electronic device.

2. The combination according to claim 1, wherein the boss element has a part-spherical/hemispherical/spherical portion to engage with a complementary shaped recess.

3. The combination according to claim 1 or claim 2, wherein the frame portion comprises two laterally spaced arm portions each having a boss element at one end.

4. The combination according to claim 3, wherein the laterally spaced arm portions of the frame originate from a common apex to define the sides of a triangular shape.

5. The combination according to any preceding claim, wherein the strap and the device are arranged such that the boss element is held in the or each recess by abutment with a removable portion of the device.

6. The combination according to claim 5, wherein the boss element has a flat portion to abut with the removable portion of the device.

7. The combination according to claim 5 or claim 6, wherein the removable portion is the electronic device battery.

8. The combination according to any preceding claim, wherein the boss element is fixedly attached to the frame portion.

9. The combination according to any preceding claim, wherein the or each recess is located towards the base of the electronic device.

10. The combination according to any preceding claim, wherein the frame portion end opposing the boss element end is arranged to be used to carry/wear the electronic device.

11. The combination according to any preceding claim, wherein the electronic device is a mobile phone.

12. The combination according to any preceding claim, wherein the boss element is substantially flat and has an axis of symmetry perpendicular to the plane of the frame portion.

13. The combination according to any preceding claim, wherein said frame portion is formed from a flexible material.

14. The combination according to any preceding claim, wherein said frame portion is formed from a rigid material.

15. The combination according to any preceding claim, wherein the boss element is formed of a rigid material.

16. The combination according to any preceding claim, wherein the electronic device comprises: a first cover; a recess in said first cover for receiving a boss element of a strap; and a second cover.

17. The combination according to claim 16, wherein said strap is secured into said first cover by disposing a removable second cover thereon.

18. The combination according to any preceding claim, wherein said recess comprises a slit for guiding a boss member into the recess.

19. The strap as defined in any preceding claim.

20. The electronic device as defined in any preceding claim.
